## Europäisches Patentamt
## European Patent Office
## Office européen des brevets

(19)

(11) Numéro de publication: **0 141 736**
**A2**

# (12) DEMANDE DE BREVET EUROPEEN

(21) Numéro de dépôt: **84402162.6**

(51) Int. Cl.⁴: **G 02 C 7/16**

(22) Date de dépôt: **26.10.84**

(30) Priorité: **28.10.83 FR 8317244**
**12.01.84 FR 8400388**
**19.07.84 FR 8411447**

(43) Date de publication de la demande: **15.05.85**
**Bulletin 85/20**

(84) Etats contractants désignés: **AT BE CH DE GB IT LI LU NL SE**

(71) Demandeur: **Binh, Paul, 17, rue Dailly, F-92210 Saint-Cloud (FR)**
Demandeur: **Blanié, Paul, 282 rue Saint-Jacques, F-75005 Paris (FR)**

(72) Inventeur: **Binh, Paul, 17, rue Dailly, F-92210 Saint-Cloud (FR)**
Inventeur: **Blanié, Paul, 282 rue Saint-Jacques, F-75005 Paris (FR)**

(74) Mandataire: **Bruder, Michel, Cabinet Michel Bruder 10, rue de la Pépinière, F-75008 Paris (FR)**

(54) **Correcteur universel de vision.**

(57) Un correcteur universel de vision s'appliquant notamment à la myopie, l'hypermétropie, l'astigmatisme et la presbytie comprend, en avant de l'oeil, une zone opaque (2) entourant une petite zone centrale (3) située dans l'axe de vision, cette petite zone centrale (3) transparente formant diaphragme et créant une image rétinienne réduite donnant une vision nette.

La zone opaque (2) est continue, elle a un diamètre moyen minimal de 3 mm et maximal de 8 mm pour conserver la vision périphérique et la zone centrale transparente (3) a une surface allant de 0,2 à 3,5 mm² et de préférence de 0,5 à 1 mm².

La présente invention concerne un correcteur universel de vision s'appliquant notamment à la myopie, l'hypermétropie, l'astigmatisme et la presbytie.

Jusqu'à présent, pour corriger ces divers besoins, on utilise des verres correcteurs dont les foyers sont tels que dans tous les cas, les rayons semblent provenir du "Punctum Remotum" de l'oeil traité, ce qui a pour conséquence que l'oeil n'accommode pas.

Par ailleurs on connaît également des lunettes dont les "verres" sont en fait constitués de plaques opaques percées de trous. Une telle paire de lunettes est décrite par exemple dans le brevet US-A-3 967 885. Une paire de lunettes de ce type présente l'inconvénient que l'opacité globale de la surface des verres entraîne une occlusion latérale de la vision et une dilatation permanente de la pupille qui provoque à son tour une tétanisation du muscle qui commande la dilatation et la contraction de la pupille.

On connaît également, ainsi qu'il est décrit dans le brevet US 3 794 414, une lentille de contact bifocale conçue pour la vision de loin. Cette lentille comprend une zone centrale transparente entourée d'une succession de zones opaques individuelles séparées les unes des autres par des fentes transparentes. Or il s'est avéré à l'usage qu'une lentille de contact conforme à cebrevet ne peut en aucune manière jouer le rôle d'un correcteur universel de vision.

La présente invention concerne un correcteur de vision de conception particulièrement simple.

A cet effet ce correcteur universel de vision comprenant, en avant de l'oeil, une zone opaque entourant une petite zone centrale située dans l'axe de vision, cette petite zone centrale transparente formant diaphragme et créant une image de rétinenne réduite donnant une vision nette, est caractérisé en ce que la zone opaque est continue, elle a un diamètre moyen minimal de 3 mm et maximal d 8 mm pour conserver la vision périphérique, et la zone cen trale transparente a une surface allant de 0,2 à 3,5 mm2 et de préférence de 0,5 à 1 mm2.

Par "zone opaque" on entend toute surface empêchant la perception par l'oeil des rayons lumineux tandis que la "zone transparente", constituée d'un trou ou d'une portion solide, laisse, au contraire, passer les rayons lumineux.

La zone opaque entourant la zone centrale transparente peut être réalisée d'une manière indépendante, en une matière opaque, en formant une sorte de "rondelle" ou bien encore elle peut être formée sur la face avant ou arrière d'un support en matière transparente. La zone centrale transparente peut être constituée, dans ce cas, par la matière du support ou bien par un trou percé dans celui-ci.

Un seul et même correcteur de vision suivant l'invention peut être utilisé pour corriger les états visuels classiques à savoir myopie, hypermétropie, astigmatisme et presbytie du fait que l'image rétinienne réduite donne une vision nette tout en conservant le champ périphérique, ce qui est indispensable dans la vie sociale et au plan pratique.

La zone centrale transparente a, de préférence, une surface de 0,5 à 1 mm$^2$ et la zone opaque a également, de préférence, un diamètre de 4 à 5 mm.

Pour les amétropies courantes, allant de 0,25 à 10 dioptries, on obtient, avec le dispositif suivant l'invention, une vision correcte et ce sans aberrations pour une zone transparente centrale ayant une surface d'environ 0,8 mm2 (diamètre 1 mm).

Du fait que l'oeil est mobile, les champs de vision verticale et horizontale sont respectivement de 120° et 150°; bien que le champ de vision nette ne soit que de 1 minute d'angle, on peut augmenter le champ de vision nette en associant, sur un même support transparent, plusieurs "rondelles", c'est-à-dire plusieurs zones centrales transparentes entourées respectivement de zones opaques. La distance entre les zones transparentes est fonction des diamètres de celles-ci pour éviter les interférences. Cette disposition permet de retrouver le champ normal de vision sans nécessiter une rotation de la tête.

Les zones centrales transparentes peuvent avoir toute forme géométrique appropriée, par exemple circulaire, rectangulaire ou encore elliptique, la zone opaque l'entourant ayant une surface homothétique ou non.

Le correcteur suivant l'invention peut être utilisé pour des applications très différentes. Il peut être notamment utilisé sous la forme d'une paire de lunettes. Dans ce cas, il convient de respecter la distance interpupillaire qui est, pour les hommes, de 63 à 68 mm et, pour les femmes, de 60 mm à 64 mm. On peut, dans ce cas, prévoir plusieurs solutions. Suivant une première solution chaque support transparent est monté réglable en position sur une barrette transversale et horizontale commune et une fois le réglage correspondant à la distance interpupillaire obtenu, il est immobilisé en position, par tout moyen approprié. Suivant une deuxième solution la monture est réalisée en deux parties fixes, reliées entre elles par une barrette intermédiaire, de longueur convenable pour s'adapter aux distances interpupillaires des diverses personnes. Suivant une troisième solution la monture et les verres sont fixes et l'emplacement des zones ponctuelles transparentes sur chacun des deux verres est choisi en fonction de la distance interpupillaire du porteur des lunettes.

Le correcteur suivant l'invention peut être utilisé également avec des appareils de visée tels qu'appareils photographiques, caméras, jumelles, microscopes etc, pour permettre une meilleure vision aux personnes présentant un besoin. Dans ce cas, le support transparent, présentant la zone centrale transparente bordée de la zone opaque, peut être fixé directement sur l'oculaire, par exemple par collage, ou de préférence à 1 cm de celui-ci, pour augmenter le champ de vision. On peut également former directement la zone opaque sur l'oculaire lui-même, par gravure ou tout autre moyen.

De la même façon les mêmes techniques peuvent être utilisées pour des lunettes de protection de soudeurs, mineurs, glaciologues, etc..

4

Il peut également être adapté à des lunettes pour la télévision, le support transparent étant alors légèrement coloré, ou encore à des lunettes pour la vision en relief (support transparent rouge d'un côté et bleu de l'autre).

En ce qui concerne les applications précédentes, un oeil normal n'est en fait pas perturbé par les correcteurs suivant l'invention que constituent les zones opaques entourant les zones centrales transparentes. Il y a une simple augmentation du contraste et une compatibilité totale. On sait par expérience optométrique, que le confort optimal de vision d'un oeil normal est obtenu lorsque devant cet oeil est placé un diaphragme appelé " trou sténopéique".

On décrira ci-après, à titre d'exemples non limitatifs, diverses formes d'exécution de la présente invention, en référence au dessin annexé sur lequel :

La figure 1 est une vue en élévation d'un correcteur d'amétropies .

La figure 2 est une vue en perspective d'une application du correcteur sous la forme d'une paire de lunettes.

La figure 3 est une vue en perspective d'une variante d'exécution d'une paire de lunettes utilisant le correcteur suivant l'invention.

La figure 4 est une vue en coupe verticale schématique d'un correcteur utilisé en tant que lentille de contact.

La figure 5 est une vue en élévation d'une variante d'exécution du correcteur.

La figure 6 est une vue en coupe verticale schématique d'une autre variante d'exécution du correcteur .

La figure 7 est une vue en élévation d'un correcteur réalisé sous la forme d'une paire de lunettes.

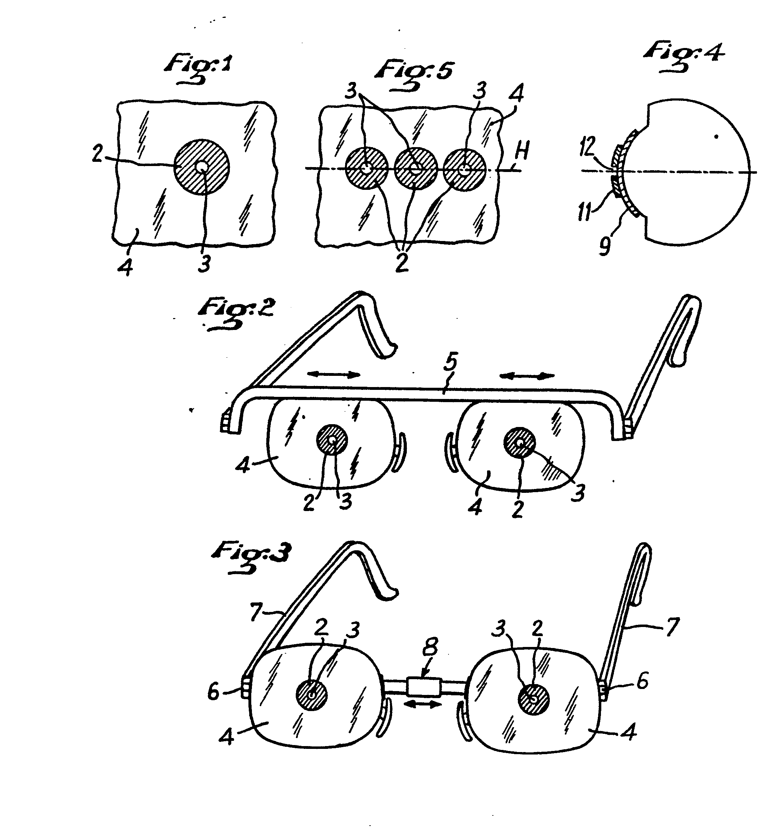

Le correcteur universel d'amétropies suivant l'invention qui est représenté sur la figure 1, comprend une zone opaque 2 entourant une zone centrale 3 transparente, de petite dimension et formant "diaphragme". Cette zone centrale transparente 3 peut avoir toute forme appropriée, notamment circulaire, polygonale, elliptique ou autre, de même que la zone opaque 2 l'entourant. La surface de la zone

5

opaque 2 est homothétique de celle de la surface de la zone transparente centrale 3 ou différente de cette surface homothétique.

A la suite de nombreux essais il s'est révélé que la surface de la zone centrale transparente 3 formant diaphragme doit être comprise entre 0,2 et 3,5 mm2. Par exemple une surface de 0,5 mm2 permet d'obtenir une bonne correction pour les amétropies courantes allant de 0,25 à 10 dioptries, la zone opaque 2 qui l'entoure ayant une surface minimale de 27 mm2. Si on respecte ces conditions, on obtient une vision nette, quel que soit l'état visuel à compenser et ce sans aberrations.

On a constaté d'une manière surprenante que le correcteur suivant l'invention permettait, du fait de la présence de la zone opaque continue de faibles dimensions, d'obtenir des images nettes tout en conservant le champ visuel périphérique.

La zone opaque 2 peut être totalement indépendante et elle peut constituer une sorte de "rondelle" en une matière opaque, la zone centrale transparente 3 étant formée par un simple trou. La zone opaque 2 peut être aussi déposée ou collée sur un support 4 en matière transparente comme il est représenté sur la figure 1, la zone centrale transparente 3 étant alors constituée par la portion de support 4 se trouvant au centre de la zone opaque 2.

Le support transparent 4 peut avoir la forme d'un verre de lunettes habituel, comme il est représenté sur les figures 2 et 3.

La figure 2 illustre une paire de lunettes comportant une barrette transversale et horizontale commune 5 sous laquelle sont fixés les deux supports transparents 4 associés respectivement aux deux yeux. Chacun de ces supports peut être déplacé sur la barrette 5, par exemple de 2 mm. pour permettre une adaptation de la distance entre les deux supports 4 à la distance interpupillaire du porteur de lunettes. Une fois la distance appropriée obtenue, on fixe définitivement chaque support 4 sur la barrette 5, par tous moyens appropriés, par exemple par un clips ou un collage rapide.

Dans la variante d'exécution illustrée sur la figure 3, la monture de la paire de lunettes est constituée en deux parties comprenant chacune un support transparent 4 sur lequel est articulé, autour d'une charnière 6, une branche 7 de la monture. Les deux supports 4 sont en outre reliés horizontalement par une barrette intermédiaire 8 de longueur variable convenable pour la distance interpupillaire du porteur. Cette barrette intermédiaire 8 peut être réalisée sous forme télescopique.

Le correcteur suivant l'invention peut faire également partie d'un lorgnon reposant sur le nez, les deux "rondelles" étant alors reliées, par un simple fil, à la partie du lorgnon prenant appui sur le nez.

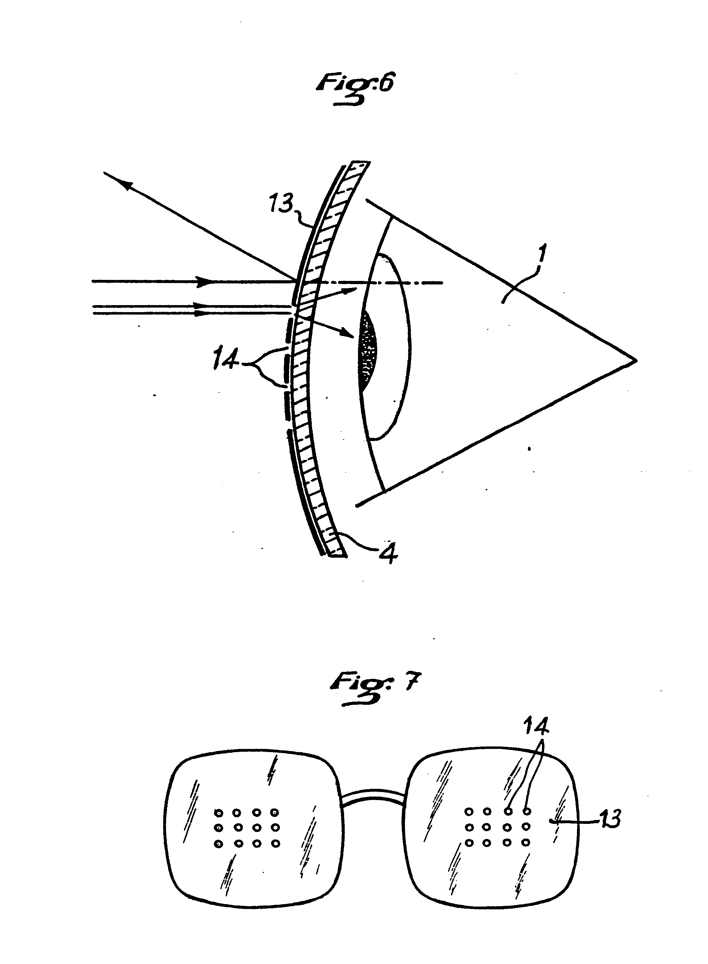

La figure 4 illustre l'utilisation du correcteur suivant l'invention en tant que lentille de contact. Cette lentille de contact comporte, comme dans les cas précédents, un support transparent 9 présentant la forme d'une surface courbe dont le rayon de courbure correspond à la cornée traitée. Ce support transparent 9 présente également une zone opaque 11 entourant une zone centrale transparente 12 de petite dimension.

La figure 5 illustre le cas de plusieurs zones opaques 2 prévues sur un même support transparent 4 et alignées suivant un plan horizontal H et entourant chacune une zone centrale transparente 3 de petite dimension. Trois zones opaques 2 voisines suffisent pour assurer une bonne vision dans le champ horizontal. Une disposition similaire peut être également adoptée dans le plan vertical.

Suivant une autre variante d'exécution le correcteur peut être constitué par un morceau d'une bande opaque perforée, à des intervalles réguliers, de trous disposés en quinconce, la distance entre les trous élémentaires formant diaphragmes étant supérieure ou égale à 3 mm.

Il est ainsi possible de couper à la longueur désirée des morceaux de bande opaque perforée des trous formant diaphragmes, ces morceaux de bande pouvant être collés tels quels sur des supports transparents.

Suivant une autre variante de l'invention, dans le cas d'une utilisation du correcteur sous la forme d'une paire de lunettes, ce correcteur peut être constitué par une rondelle opaque, transparente dans sa partie centrale, laquelle est déposée, par sérigraphie ou par tout autre moyen, sur chacun des deux verres d'une paire de lunettes classiques, et ce en des emplacements correspondant à la distance interpupillaire du porteur des lunettes. Autour de cette rondelle principale correspondant à la distance interpupillaire sont disposées en quinconce d'autres rondelles auxiliaires.Ceci permet d'utiliser une seule et même monture standard, équipée de ses verres transparents, pour tous les utilisateurs, quelle que soit la distance interpupillaire de ceux-ci.

Le correcteur qui est représenté sur les figures 6 et 7, en avant de l' oeil 1, comprend un support transparent 4, par exemple en verre ou matière plastique, sur la face antérieure duquel est déposée une couche mince 13 réfléchissant la lumière. Cette couche 13 ne réfléchit pas la totalité du faisceau lumineux incidentmais elle laisse passer une partie plus ou moins faible de ce flux lumineux incident, si bien que l'oeil peut voir à travers la couche mince 13 relativement opaque, mais avec un affaiblissement de la luminosité. Dans cette couche mince 13 réfléchissante et faiblement transparente sont laissées des zones ponctuelles transparentes 14 de petite dimension et formant "diaphragmes".Ces zones ponctuelles transparentes 14 peuvent aussi être constituées par des trous percés de part en part dans le support transparent 4 et la couche mince réfléchissante 13.

A la suite de nombreux essais il s'est révélé que la surface de chaque zone ponctuelle transparente 14 formant diaphragme doit être comprise entre 0,2 et 3,5 mm2 et elle est de préférence voisine de 1 mm2.

Le support transparent 4 peut avoir la forme habituelle d'un verre d'une paire de lunettes comme il est représenté sur la figure 7. Dans ce cas chaque verre présente une surface antérieure réfléchissante 13 dans la partie centrale de laquelle est formé un groupe de zones ponctuelles transparentes 14 distantes les unes des autres. Ces zones 14 sont avantageusement réparties à une distance minimale d'environ 3mm les unes des autres. Elles peuvent être réparties suivant une disposition matricielle, c'est-à-dire en rangées et colonnes, comme il est représenté sur la figure 7.

Dans le cas de la correction permanente de la vision, le correcteur peut constituer une lentille cornéenne, appelée encore "lentille ou verre de contact", sur laquelle on laisse, par sérigraphie ou tout autre moyen, une zone transparente centrale entourée d'une bordure opaque à la lumière. La fabrication de ces lentilles est considérablement simplifiée par rapport aux lentilles de contact connues actuellement: en effet un seul modèle convient pour toutes les personnes présentant un besoin visuel quel qu'il soit. On peut éventuellement prévoir deux ou trois rayons de courbure différents en fonction des diamètres des cornées à traiter.

Ces lentilles doivent avoir une mobilité faible devant la pupille. Si elles sont fabriquées dans une matière adéquate, on obtient des lentilles jetables, sans entretien et ou à port permanent.

Dans le cas où le correcteur constitue une lentille cornéenne ou lentille de contact, on peut utiliser preférentiellement la zone opaque connue un réservoir d'un produit liquide utilisable à des fins thérapeutiques ou hygiéniques.

REVENDICATIONS

1.- Correcteur universel de vision comprenant, en avant de l'oeil, une zone opaque (2) entourant une petite zone centrale (3) située dans l'axe de vision, cette petite zone centrale (3) transparente formant diaphragme et créant une image rétinienne réduite donnant une vision nette, caractérisé en ce que la zone opaque (2) est continue, elle a un diamètre moyen minimal de 3 mm et maximal de 8 mm pour conserver la vision périphérique et la zone centrale transparente (3) a une surface allant de 0,2 à 3,5 mm2 et de préférence de 0,5 à 1 mm2.

2.- Correcteur suivant la revendication 1 caractérisé en ce que la zone opaque (2) entourant la zone centrale transparente (3) est formée sur la face avant ou arrière d'un support (4) en matière transparente.

3.- Correcteur suivant l'une quelconque des revendications précédentes caractérisé en ce que la zone centrale transparente (3) est constituée par un trou percé de part en part ou par un morceau de matière transparente.

4.- Correcteur suivant l'une quelconque des revendications précédentes caractérisé en ce qu'il comporte, sur un même support transparent (4), plusieurs zones opaques (2) alignées dans la direction horizontale et/ou verticale, chacune de ces zones opaques (2) entourant une zone centrale transparente (3) de petite dimension formant diaphragme.

5.- Correcteur suivant l'une quelconque des revendications précédentes caractérisé en ce que chaque zone opaque (2) est formée sur un support transparent (4) analogue à un verre de lunettes, les deux supports transparents (4) étant portés par une même monture, et des moyens sont prévus pour faire varier la distance entre les supports transparents (4) de manière à adapter cette distance à la distance interpupillaire du porteur.

6.- Correcteur de l'oeil suivant la revendication 1 caractérisé en ce qu'il est constitué par un morceau d'une bande opaque perforée, à des intervalles réguliers, de trous disposés en quinconce, la distance entre les trous élémentaires formant diaphragmes étant supérieure ou égale à 4 mm.

7.- Correcteur de l'oeil suivant la revendication 1 caractérisé en ce que, dans le cas où il est utilisé sous la forme d'une paire de lunettes il est constitué par une rondelle opaque, transparente dans sa partie centrale, laquelle est déposée sur chacun des deux verres d'une paire de lunettes classique, et ce en des emplacements correspondant à la distance interpupillaire du porteur des lunettes.

8.- Correcteur de l'oeil suivant la revendication 7 caractérisé en ce que d'autres rondelles auxiliaires sont disposées en quinconce autour de la rondelle principale correspondant à la distance interpupillaire.

9.- Correcteur suivant la revendication 1 caractérisé en ce que la zone opaque (2) entourant la zone centrale transparente (3) est réalisée d'une manière indépendante, en une matière opaque, en formant une sorte de rondelle.

10.- Correcteur suivant la revendication 1 caractérisé en ce qu'il constitue une lentille de contact, la zone opaque (11) étant formée sur un support transparent (9) présentant la forme d'une surface courbe dont le rayon de courbure est adapté à la cornée traitée.

11.- Correcteur suivant la revendication 1 caractérisé en ce qu'il comprend un support transparent (4) sur la face antérieure duquel est formée une surface fortement réfléchissante (13) dans la direction de l'oeil, tout en permettant une vision dans l'autre direction, cette surface constituant en quelque sorte l'équivalent d'un miroir sans tain, et dans cette surface, des zones ponctuelles transparentes (14) formant diaphragmes qui sont à une distance minimale d'environ 3 mm les unes des autres.

Fig.1

Fig.5

Fig.4

Fig.2

Fig.3

*Fig:6*

13

14

1

4

*Fig: 7*

14

13